# EUROPÄISCHE PATENTSCHRIFT

(11) **EP 0 906 204 B1**
(45) Veröffentlichungstag und Bekanntmachung des Hinweises auf die Patenterteilung: **29.12.1999**
(21) Anmeldenummer: 97930314.6
(22) Anmeldetag: 09.06.1997
(51) Int. Cl.: B60R 21/16

(54) **GASSACKFALTUNG SOWIE VERFAHREN UND VORRICHTUNG ZUR GASSACKFALTUNG**
GAS BAG FOLDING SYSTEM, GAS BAG FOLDING PROCESS AND DEVICE
SYSTEME DE PLIAGE D'UN SAC A GAZ, PROCEDE ET DISPOSITIF DE PLIAGE D'UN TEL SAC

(30) Priorität: 17.06.1996 DE 19625109
(43) Veröffentlichungstag der Anmeldung: 07.04.1999
(73) Patentinhaber: Petri AG, 63743 Aschaffenburg (DE)
(72) Erfinder: PAUSCH, Tobias, D-08349 Johanngeorgenstadt (DE)
(74) Vertreter: Bärmann, Klaus, Dipl.-Ing.
(86) Internationale Anmeldenummer: DE9701203
(87) Internationale Veröffentlichungsnummer: WO9748580

(56) Entgegenhaltungen:
- EP-A- 0 619 204
- DE-A- 4 422 276
- GB-A- 2 192 841
- ADOMEIT H -D: "NEUE METHODEN UND NEUE ZIELE BEI DER ENTWICKLUNG VON INSASSEN SCHUTZSYSTEMEM NEW METHODOLOGY AND NEW TARGETS IN DEVELOPMENT OF OCCUPANT PROTECTION SYSTEMS" ATZ AUTOMOBILTECHNISCHE ZEITSCHRIFT, Bd. 97, Nr. 7/08, Seiten 458-462, XP000521275

## Beschreibung

Die Erfindung betrifft eine Gassackfaltung nach dem Oberbegriff des Anspruchs 1 sowie ein Verfahren und eine Vorrichtung zur Gassackfaltung.

Aus der DE 44 22 276 A1 ist ein gattungsgemäßer Gassack für ein Airbagmodul bekannt, bei dem der Gassack Hauptfalten aufweist, die zumindest zu einem Teil entlang geschlossener Bahnen um ein gedachtes Zentrum auf dem im wesentlichen leeren, ausgebreiteten Gassack herum verlaufen. Die geschlossenen Hauptfalten beschreiben vorzugsweise Kreisbahnen oder Ellipsen geringer Exzentrizität. Die Falten verlaufen vorwiegend senkrecht zu der Ebene, in der der Gassack vor dem Falten ausgebreitet wird. Der Gassack weist ein Ober- und ein Unterteil auf, die gemeinsam gefaltet werden.

Dieser Verlauf der Hauptfalten weist den Vorteil auf, daß sich der gefaltete Gassack schnell und einfach öffnen kann. Insbesondere besteht beim Entfalten eines derartigen Gassackes nicht die Gefahr, daß der in Teilbereichen des Gassackes erzeugte Innendruck das Öffnen weiterer Falten verhindert. Dabei ist dieser Gassack für Fahrer-, Beifahrer- und Seitenairbags einsetzbar.

**Weiterhin ist aus der EP-A-0 619 204 ein Beifahrerairbag bekannt, bei dem der Gassack in Schußrichtung zwei nebeneinander liegende Faltenlagen aufweist, zwischen denen ein in Schußrichtung verlaufender Zwischenraum vorhanden sein soll. Da dieser Zwischenraum aber in der gefalteten Lage des Gassacks im Airbagmodul praktisch nicht vorhanden ist, und vielmehr die nebeneinander liegenden Faltenlagen wegen des erforderlichen Zusammenpressens beim Verstauen sogar ineinander greifen, wird das Entfalten des Gassacks erschwert.**

Der Erfindung liegt die Aufgabe zugrunde, die Zeit für die Entfaltung des Gassackes noch weiter zu verringern.

Erfindungsgemäß wird das gemäß den Merkmalen des Anspruchs 1 erreicht.

Bei einem Gassack für ein Airbagmodul der im nicht aktivierten Zustand gefaltet ist, **und eine geschlossene Oberseite** und eine einen Einblasmund oder eine Öffnung zur Einführung eines Gasgenerators in den Gassack **aufweisende Unterseite** aufweist, **wobei in beiden Seiten jeweils mindestens eine sich senkrecht zu diesen erstreckende Falte vorgesehen ist, verläuft erfindungsgemäß jede Falte der einen Seite von der jeweils gegenüberliegenden Falte der anderen Seite getrennt**. Bei Versuchen hat sich ergeben, daß sich durch diese getrennte Anordnung der Falten eine extrem schnelle Entfaltung des Gassacks erreichen läßt.

In einer bevorzugten Ausführungsform weisen die Oberseite und die Unterseite mindestens je eine äußere und je eine innere Hauptfalte auf. Als äußere Hauptfalte wird die bezeichnet, die auf der Ober- bzw. Unterseite des gefalteten Gassacks sichtbar ist, während die innere Hauptfalte diejenige ist, die der Hauptfalte des jeweilig anderen Teils im Inneren des gefalteten Gassacks gegenüberliegt.

Die Falten verlaufen zweckmäßig so, daß sich die innere Hauptfalte der Oberseite und der Unterseite zumindest linienförmig berühren.

Die Falten verlaufen vorzugsweise so, daß sich die innere Hauptfalte der Oberseite und der Unterseite auf einer geraden oder umlaufenden Linie berühren, wobei die umlaufende Linie ringförmig oder schneckenförmig verläuft. Die Faltenlage zwischen der inneren und äußeren Hauptfalte verläuft zweckmäßig im wesentlichen senkrecht zur Ebene des ausgebreiteten leeren Gassackes.

In einer bevorzugten Ausführungsform sind mehrere äußere Hauptfalten und mehrere innere Hauptfalten vorgesehen, die sich auf umlaufenden ringförmigen Linien berühren.

Weiterhin sind die Falten vorzugsweise um einen Hohlraum herum und die Hauptfalten der Oberseite vorzugsweise symmetrisch zu den Hauptfalten der Unterseite angeordnet. Der Hohlraum ist für die Aufnahme eines Gasgenerators vorgesehen.

Im Anspruch 10 ist ein Verfahren zur Faltung eines Gassackes nach Anspruch 1 dadurch gekennzeichnet, daß der leere Gassack so ausgebreitet wird, daß eine Ober- und eine Unterseite vorhanden ist, daß anschließend beide Seiten getrennt voneinander gefaltet werden und daß die Falten gemeinsam auf die erforderliche Größe für die Verpackung im Airbagmodul zusammengerafft werden.

In einer Ausführungsart des Verfahrens werden von oben und unten Faltvorrichtungen an den Gassack herangebracht, die im wesentlichen senkrecht zur Ebene des ausgebreiteten Gassacks verlaufen. Im Gassack wird ein solcher Überdruck erzeugt, daß der Gassack zwischen die Faltvorrichtungen gedrückt wird. Der Überdruck kann sowohl vor als auch nach dem Heranbringen der Faltvorrichtungen an den Gassack in diesem erzeugt werden. Infolge des Überdrucks zwischen der Ober- und Unterseite werden diese voneinander entfernt und zwischen den Faltplatten getrennt voneinader gefaltet. Die Falten werden anschließend im wesentlichen quer zur Faltrichtung zusammengedrückt. Anschließend werden die Faltvorrichtungen vom Gassack entfernt.In einer weiteren Ausgestaltung ist vorgesehen, daß die Entfernung der Faltvorrichtungen unter gleichzeitiger Erzeugung eines Unterdruckes im Gassack erfolgt.

Eine Vorrichtung zur zur Durchführung des Verfahrens nach Anspruch 10 ist im Anspruch 13 dargestellt.

In einer ersten Ausführungsform sind sich überlappende Faltplatten angeordnet, die gegeneinander verschiebbar sind. Zur Erzielung von Falten, die entlang geschlossener Kreisbahnen verlaufen, sind die sich überlappenden, gegeneinander verschiebbaren Faltplatten auf konzentrischen Kreisen angeordnet. Der Gassack wird in der Ausgangsstellung der Faltplatten, in der sich diese nur gering überlappen, gefaltet. Für das Zusammendrücken des Gassackes und damit der Falten auf das erforderliche Staumaß werden die Faltplatten übereinander geschoben, d.h., die Überlappung wird größer und der Radius der Kreise, auf denen die Faltplatten liegen, verringert sich.

In einer weiteren Ausführungsform ist vorgesehen, daß als Faltvorrichtung mindestens eine Spiralfeder angeordnet ist. Vorzugsweise ist ober- und unterhalb des Gassackes mindestens je eine Spiralfeder vorgesehen. Die Spiralfeder ist so gewickelt, daß ihre Wickellagen mit Abstand zueinander verlaufen, so daß der Gassack beim Aufblasen während des Faltvorganges in diesen Zwischenraum eindringen kann. Für den Faltvorgang werden die Spiralfedern an den Gassack herangedrückt. Nach Abschluß der Faltung und dem anschließenden Zusammendrücken der Falten drehen sich die Spiralfedern ein, so daß sich Ihr Durchmesser verringert.

In einer dritten Ausführungsform ist als Faltvorrichtung mindestens eine spiralförmige Faltschale vorgesehen. Vorzugsweise ist ober- und unterhalb des Gassackes mindestens je eine spiralförmige Faltschale vorgesehen. In einer Ausführungsform sind mehrere aufeinanderfolgende Faltschalen vorgesehen, wobei sich jede Faltschale zweckmäßig über einen Winkelbereich von etwa 360° erstreckt.

Mit den beiden zuletzt genannten Ausführungsformen der Vorrichtung werden schneckenförmig verlaufende Falten erzeugt. Dabei befindet sich auf der Ober- und der Unterseite je eine schneckenförmig verlaufende äußere und innere Hauptfalte.

Zur Unterstützung der Faltenerzeugung ist in einer weiteren Ausführungsform vorgesehen, daß von außen auf die Gassackoberfläche ein Über- und/oder Unterdruck anlegbar ist, wobei Über- und Unterdruck über Öffnungen in den Faltschalen oder Faltschalenzwischenräumen auf die Gassackoberfläche aufbringbar sind.

Die Erfindung soll in Ausführungsbeispielen anhand von Zeichnungen erläutert werden. Es zeigen:
- Fig. 1: einen erfindungsgemäß gefalteten Gassack in perspektivischer Ansicht, teilweise geschnitten;
- Fig. 2: eine Darstellung der Falten an der Oberplatte des ausgebreiteten Gassacks;
- Fig. 3a, 4a 5a, 6a 7a, 8a: Schnitte durch einen Gassack in unterschiedlichen Stadien der Faltung;
- Fig. 3b, 4b 5b, 6b 7b, 8b: Draufsichten auf einen Gassack in unterschiedlichen Stadien der Faltung;
- Fig. 9: die Draufsicht auf ein schneckenförmiges Gassackpaket;
- Fig. 10: eine Darstellung der Falten an der Oberplatte des ausgebreiteten Gassacks nach Fig. 9;
- Fig. 11: eine Faltvorrichtung mit Spiralfedern zur Erzielung einer schneckenförmigen Faltung;
- Fig. 12: offene Faltschalen zur Erzielung einer schneckenförmigen Faltung;
- Fig. 13a, 14a, 15a, 16, 17: Draufsichten auf einen Gassack in unterschiedlichen Stadien einer gradlinigen Faltung, **wobei diese Figuren nur der Erläuterung dienen**;
- Fig. 13b, 14b, 15b: Schnitte durch einen Gassack in unterschiedlichen Stadien einer gradlinigen Faltung, **wobei diese Figuren ebenfalls nur der Erläuterung dienen**;

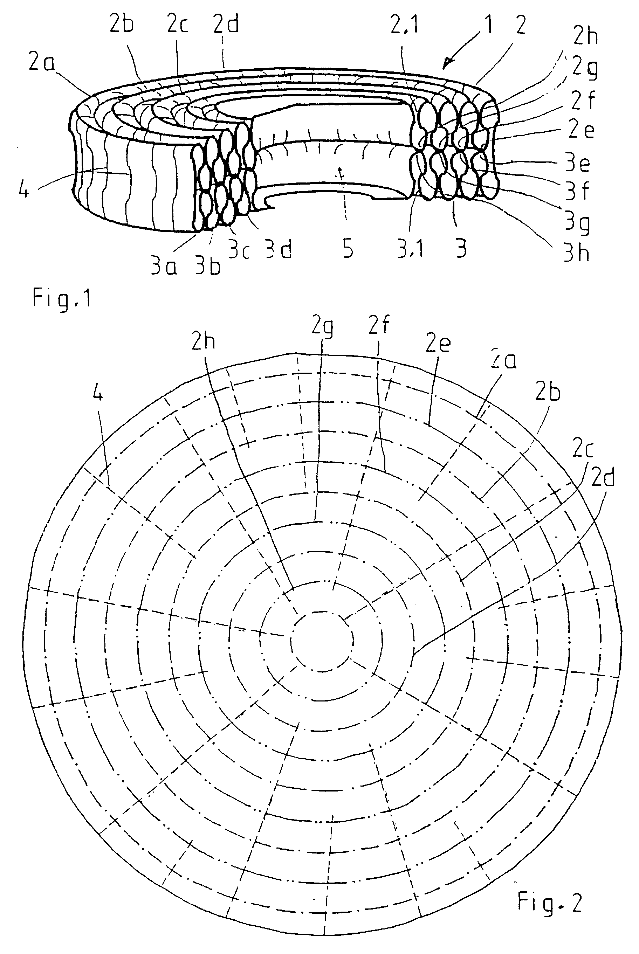

Der in der Fig. 1 dargestellte gefaltete Gassack 1 weist eine Oberseite 2 mit ringförmigen äußeren Hauptfalten 2a, 2b, 2c und 2d sowie ringförmigen inneren Hauptfalten 2e, 2f, 2g und 2h auf.

Der Gassack 1 weist weiterhin eine Unterseite 3 mit ringförmigen äußeren Hauptfalten 3a, 3b, 3c und 3d sowie ringförmigen inneren Hauptfalten 3e, 3f, 3g und 3h auf. Diese letztgenannten Hauptfalten erstrecken sich in der Mitte des dargestellten gefalteten Gassackes und berühren dort die Hauptfalten 2e bis 2h der Oberseite 2. Die Berührung erfolgt im vorliegenden Ausführungsbeispiel auf ringförmigen umlaufenden Linien.

Die zwischen den Hauptfalten 2a bis 2d bzw. 3a bis 3d einerseits und den Hauptfalten 2e bis h bzw. 3e bis 3h andererseits liegenden Faltenlagen 2.1 bzw. 3.1 des Gassacks liegen im wesentlichen senkrecht zur Ebene des ausgebreiteten, ungefalteten Gassacks nebeneinander. Neben den genannten Hauptfalten weist der gefaltete Gassack eine Vielzahl von Nebenfalten 4 auf, die sich beim Falten des Gassacks wegen der Umfangsverkleinerung zwangsläufig ausbilden. Die Nebenfalten entstehen im allgemeinen willkürlich und verlaufen senkrecht zu den Hauptfalten. Die Zahl und Größe der Nebenfalten richtet sich danach, wieviel Gewebe auf welchem Umfang zusammengerafft werden muß.

Die Faltenlagen erstrecken sich rund um einen Hohlraum 5, in dem ein nicht dargestellter Gasgenerator oder Diffusor angeordnet werden kann.

Der besondere Vorteil dieser Faltungsart besteht darin, daß die Faltlagen der Oberseite und Unterseite getrennt voneinander liegen. Dabei liegen die Falten der Gassackoberseite immer über denen der Gassackunterseite, d.h. es ist eine hinterschnittfreie Faltenlage vorhanden. Diese zweigeteilte Faltenlage ermöglicht eine extrem schnelle Entfaltung des Gassackes. Dabei ergeben sich keine Einschränkungen hinsichtlich der Gassackgestaltung. So kann der Gassack selbsttragend mit vormontiertem Generator sein und er kann Fangbänder und Reißnähte aufweisen. Es ist eine allseitige, radiale Ausbreitung möglich und es ist keine Relativbewegung des Gewebes am Insassen vorhanden.

In der Fig. 2 sind die vorgesehenen Falten nochmals an der Oberseite eines ausgebreiteten Gassackes dargestellt. Es sind die äußeren Hauptfalten 2a bis 2d , die inneren Hauptfalten 2e bis 2h sowie die senkrecht zu diesen verlaufenden Nebenfalten 4 erkennbar.

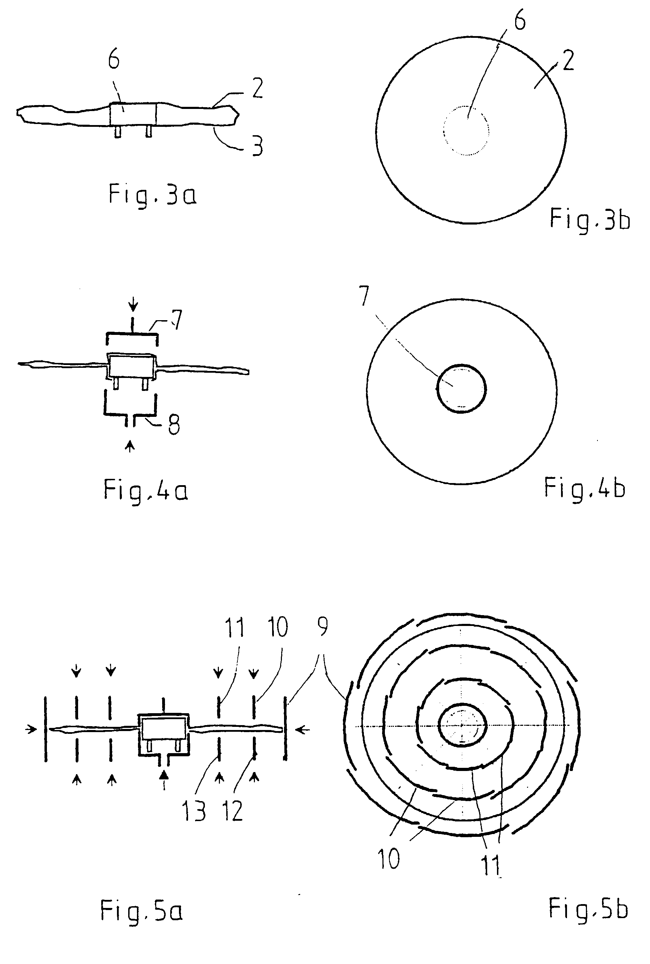

In den Figuren 3a bis 8b ist der Faltvorgang am Beispiel eines Gassackes dargestellt, der in ausgebreiteter Lage kreisrund ist und eine Oberseite 2 sowie eine Unterseite 3 aufweist. In der in den Figuren 3a und 3b dargestellten Ausgangslage wird ein topfförmiger Gasgenerator 6 im Gassack vormontiert und der vormontierte Gassack wird auf der Faltvorrichtung flach ausgebreitet, wie es aus diesen Figuren ersichtlich ist.

In einem nächsten Schritt, der in den Figuren 4a und 4b dargestellt ist, wird der im Gassack befindliche Gasgenerator durch von außen angreifende Druckschalen 7, 8 fixiert.

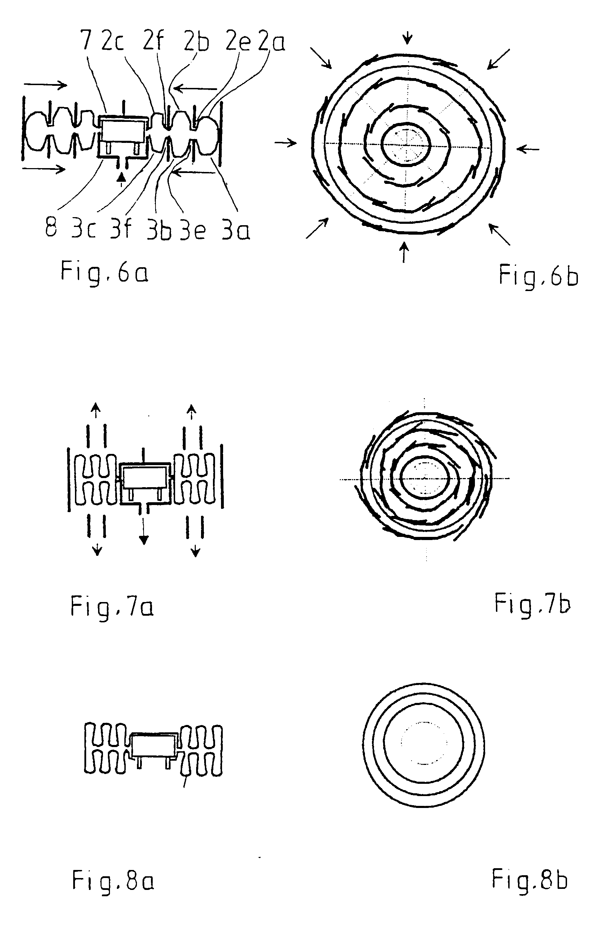

Nach der Fixierung des Gasgenerators werden Gruppen von Faltplatten 9 bis 13 an den Gassack herangebracht, wie es aus den Figuren 5a und 5b ersichtlich ist. Jede Gruppe Faltplatten ist auf einem konzentrischen Kreis angeordnet. Innerhalb jeder Gruppe sind mehrere Faltplatten vorgesehen, die sich überlappen. Der besseren Übersichtlichkeit wegen sind im vorliegenden Ausführungsbeispiel nur drei Gruppen von Faltplatten dargestellt. Die Faltplatten fixieren das Gassackgewebe auf konzentrischen Kreisen, d.h., auf umlaufenden Bahnen. Anschließend wird der Gassack mittels Druckluft aufgeblasen, die über die Druckschale 8 eingegeben wird. Dadurch wird das Gassackgewebe der Oberseite zwischen den Faltplatten 9, 10, 11 nach oben gedrückt und das Gassackgewebe der Unterseite zwischen den Faltplatten 9, 12, 13 nach unten gedrückt. Dabei entstehen an den Kanten der Faltplatten die inneren Hauptfalten 2e, 2f, 3e, 3f wie es in Fig. 6a dargestellt ist.

Nach dem Aufblasen werden die Faltplatten in Richtung der Druckschalen zusammengeschoben, wobei sich die Überlappung der einzelnen Faltschalen vergrößert, wie es aus Fig. 6b erkennbar ist. Dabei werden zwischen den Faltplatten die äußeren Hauptfalten 2a, 2b, 2c 3a, 3b, 3c gebildet. Durch die Umfangsverkleinerung beim Zusammenschieben der Faltplatten entstehen die Nebenfalten 4.

Wenn der Faltvorgang beeendet ist, werden die Faltplatten entfernt, wie es in den Figuren 7a und 7b dargestellt ist. Um einer Entfaltung beim Entfernen der Faltplatten vorzubeugen, ist es zweckmäßig, in den Druckschalen 7, 8 einen Unterdruck zu erzeugen. Mit Hilfe nicht dargestellter seitlich angreifender Stempel kann der Gassack zusätzlich komprimiert werden. Nach Abschluß des Vorganges werden die Druckschalen 7, 8 entfernt und der gefaltete Gassack kann in einem Airbagmodul verstaut werden.

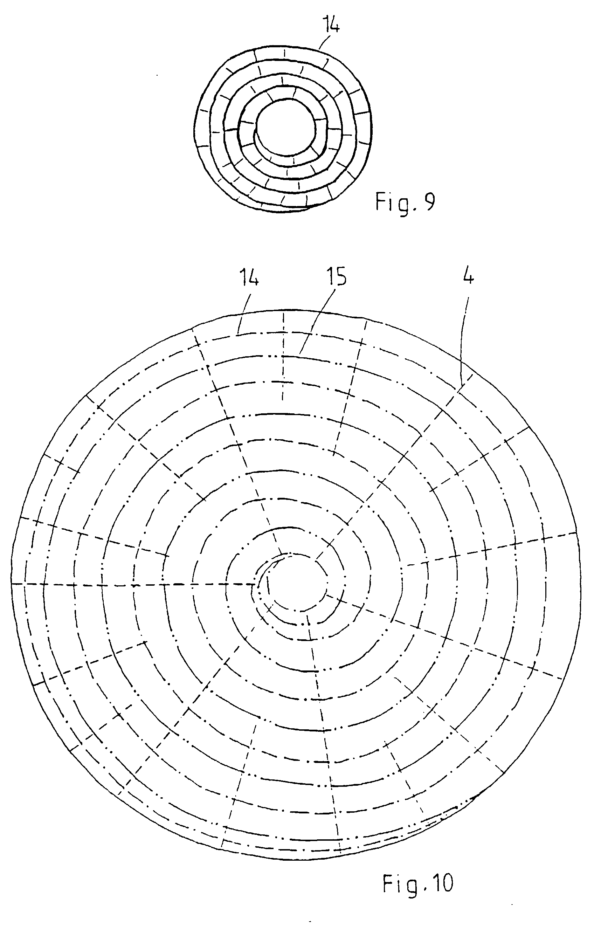

Während beim bisherigen Ausführungsbeispiel an der Ober- und Unterseite jeweils mehrere konzentrische Hauptfalten vorgesehen sind, ist beim Ausführungsbeispiel der Figuren 9 und 10 an jeder Seite jeweils nur eine umlaufende innere und äußere schneckenförmige Hauptfalte vorgesehen. So ist auf der Oberseite je eine schneckenförmig verlaufende äußere Hauptfalte 14 und innere Hauptfalte 15 vorgesehen. Weiterhin bilden sich wie beim vorhergehenden Ausführungsbeispiel Nebenfalten 4 aus. Entsprechende Falten sind auch an der nicht dargestellten Unterseite vorhanden.

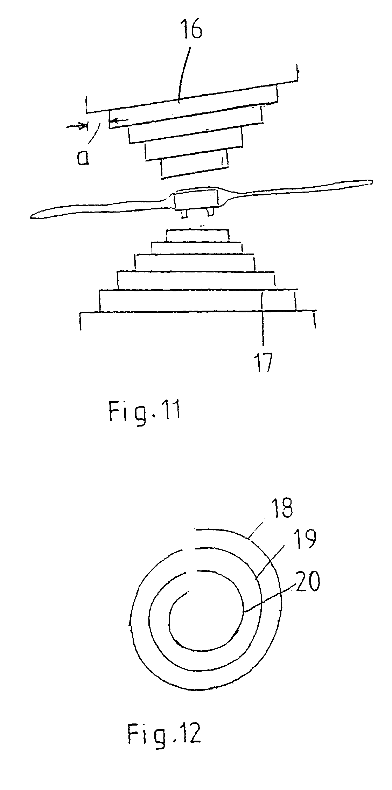

Diese schneckenförmig verlaufenden Hauptfalten können mit einem Werkzeug erzeugt werden, wie es in Fig. 11 dargestellt ist. Dieses Werkzeug weist für die Ober- und Unterseite je eine Spiralfeder 16, 17 auf, die weit gewickelt sind, so daß ein Abstand a zwischen den Wickellagen vorhanden ist, in den der Gassack beim Falten eindringen kann.

Die Spiralfedern werden für den Faltvorgang ineinander geschoben, bis sie am Gassack anliegen, wobei sich der Gassack zwischen der Spiralfeder 16 auf der einen Seite und der Spiralfeder 17 auf der anderen Seite befindet. Wie beim vorigen Ausführungsbeispiel wird anschließend der Gassack mit Druckluft beaufschlagt, wodurch der Gassack in den durch den Abstand a gekennzeichneten Zwischenraum gedrückt wird. Die Berührungslinie der Spiralfedern mit dem Gassack ergibt die innere Hauptfalte 15 der Oberseite und die nicht dargestellte innere Hauptfalte der Unterseite. Der weitere Faltvorgang entspricht dem des vorigen Ausführungsbeispiels, wobei durch das Falten des Gassacks im Zwischenraum zwischen den Wickellagen der Federn die äußere Falte 14 der Oberseite und die nicht dargestellte äußere Falte der Unterseite gebildet wird.

Eine weitere Möglichkeit zur Erzeugung einer schneckenförmigen Hauptfaltlinie besteht darin, daß als Faltvorrichtung ober- und unterhalb des Gassackes schneckenförmige Faltschalen 18, 19, 20 vorgesehen sind, die aufeinanderfolgend angeordnet sind, wie es in Fig. 12 dargestellt ist. Es ist ersichtlich, daß sich jede Faltschale über einen Winkelbereich von etwa 360° erstreckt und daß sich dann die nächste Faltschale anschließt. Diese Faltschalen sind an einer nicht dargestellten Haltevorrichtung befestigt, die gegenüber dem ausgebreiteten Gassack verschiebbar ist. Der Faltvorgang nach dem Heranbringen der Faltschalen an den Gassack ist der gleiche, wie er beim ersten Ausführungsbeispiel beschrieben wurde.

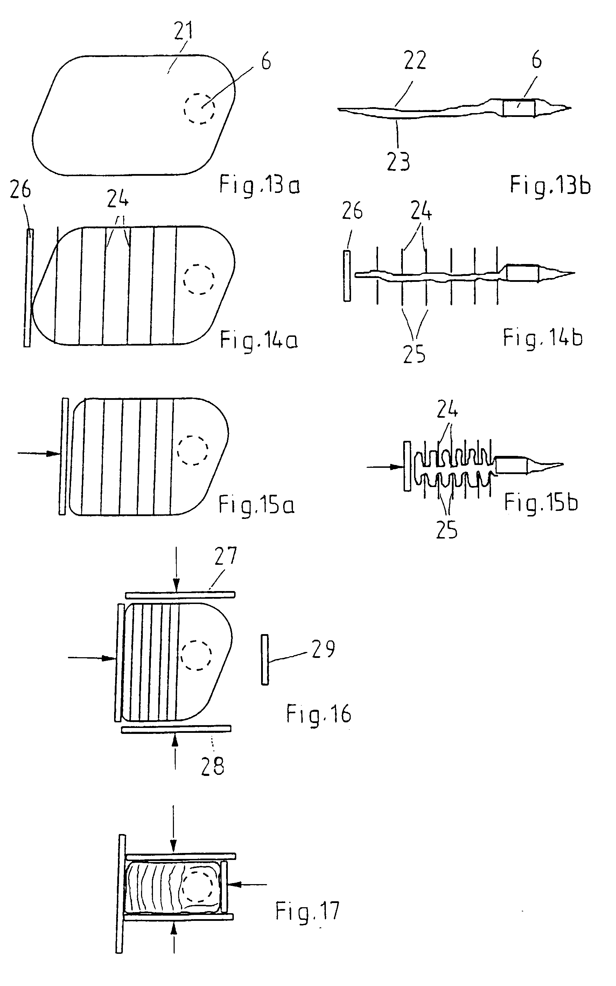

In den Figuren 13a bis 17 ist nur **zur Erläuterung** der Erfindung noch eine Faltung mit geraden Falten dargestellt. Der topfförmige Gasgenerator 6 ist asymmetrisch in einem Gassack 21 angeordnet, der eine Oberseite 22 und eine Unterseite 23 aufweist. Zur getrennten Faltung der Ober- und Unterseite werden Faltplatten 24 und 25 an den Gassack herangebracht, wie es aus den Figuren 14a und 14b ersichtlich ist. Anschließend wird der Gassack innen mit Druckluft beaufschlagt, und im Anschluß an die Druckluftbeaufschlagung wird der Abstand der Faltplatten mittels eines Schiebers 26 verringert, wie es aus den Figuren 15a und 15b ersichtlich ist.

Durch weitere Schieber 27, 28, 29 wird der Gassack anschließend nach dem Entfernen der Faltplatten und dem Abschalten der Druckluft verdichtet, bis er die in Fig. 17 dargestellte Packungsdichte aufweist.

## Patentansprüche

1. Gassack für ein Airbagmodul der im nicht aktivierten Zustand gefaltet ist, **und eine geschlossene Oberseite (2)** und eine einen Einblasmund oder eine Öffnung zur Einführung eines Gasgenerators in den Gassack **aufweisende Unterseite (3)** aufweist, **wobei in beiden Seiten (2, 3) jeweils mindestens eine sich senkrecht zu diesen erstreckende Falte vorgesehen ist,**
**dadurch gekennzeichnet,**
**daß jede Falte der einen Seite (2 oder 3) von der jeweils gegenüberliegenden Falte der anderen Seite (3, 2) getrennt verläuft**.

2. **Gassack** nach Anspruch 1, **dadurch gekennzeichnet,** daß die Oberseite und die Unterseite mindestens je eine äußere (2a - 2d, 3a - 3d, 14) und je eine innere Hauptfalte (2e - 2h, 3e - 3h, 15) aufweisen.

3. **Gassack** nach Anspruch 1 oder 2, **dadurch gekennzeichnet,** daß sich die innere Hauptfalte (2e -2h, 3e-3h) der Oberseite (2) und der Unterseite (3) zumindest linienförmig berühren.

4. **Gassack** nach mindestens einem der vorhergehenden Ansprüche, **dadurch gekennzeichnet,** daß sich die innere Hauptfalte (2e- 2h, 3e - 3h) der Oberseite (2) und der Unterseite (3) auf einer geraden oder umlaufenden Linie berühren.

5. **Gassack** nach mindestens einem der vorhergehenden Ansprüche, **dadurch gekennzeichnet,** daß die umlaufende Linie ringförmig oder schneckenförmig verläuft.

6. **Gassack** nach mindestens einem der vorhergehenden Ansprüche, **dadurch gekennzeichnet,** daß die Faltenlage (2.1, 3.1) zwischen der äußeren und inneren Hauptfalte (2a - 2d und 2e - 2h bzw. 3a -3d und 3e -3h) im wesentlichen senkrecht zur Ebene des ausgebreiteten leeren Gassackes verläuft.

7. **Gassack** nach mindestens einem der vorhergehenden Ansprüche, **dadurch gekennzeichnet,** daß mehrere äußere Hauptfalten (2a - 2d, 3a - 3d) und mehrere innere Hauptfalten (2e - 2h, 3e - 3h) vorgesehen sind, die sich auf umlaufenden ringförmigen Linien berühren.

8. **Gassack** nach mindestens einem der vorhergehenden Ansprüche, **dadurch gekennzeichnet,** daß die Falten um einen Hohlraum (5) herum angeordnet sind.

9. **Gassack** nach mindestens einem der vorhergehenden Ansprüche, **dadurch gekennzeichnet,** daß die Hauptfalten (2a - 2d bzw. 2e - 2h) der Oberseite (2) symmetrisch zu den Hauptfalten (3a - 3d bzw. 3e - 3h) der Unterseite (3) liegen.

10. **Verfahren zur Faltung eines Gassackes nach Anspruch 1 bis 9, dadurch gekennzeichnet,** daß der leere Gassack ausgebreitet wird, so daß eine Ober- und eine Unterseite (2, 3) vorhanden ist, daß anschließend beide Seiten (2, 3) getrennt voneinander gefaltet werden und daß die Falten gemeinsam auf die erforderliche Größe für die Verpackung im Airbagmodul zusammengerafft werden.

11. Verfahren nach Anspruch 10, **dadurch gekennzeichnet,** daß von oben und unten Faltvorrichtungen an den Gassack herangebracht werden, die im wesentlichen senkrecht zur Ebene des ausgebreiteten Gassacks verlaufen, daß im Gassack ein solcher Überdruck erzeugt wird, daß der Gassack in Räume zwischen den Faltvorrichtungen gedrückt wird, daß die Falten anschließend im wesentlichen quer zur Faltrichtung zusammengedrückt werden und die Faltvorrichtungen vom Gassack entfernt werden.

12. Verfahren nach Anspruch 10 oder 11, **dadurch gekennzeichnet,** daß die Entfernung der Faltvorrichtungen unter gleichzeitiger Erzeugung eines Unterdruckes im Gassack erfolgt.

13. Vorrichtung zur Durchführung des Verfahrens nach den Ansprüchen 10 bis 12, wobei gesonderte Faltvorrichtungen für die Ober- und Unterseite (2, 3) eines zwischen diesen Faltvorrichtungen **ausbreitbaren** Gassacks vorgesehen sind, und wobei die Faltvorrichtungen zumindest annähernd senkrecht zur Ober- und Unterseite (2, 3) des Gassacks verlaufen und in Richtung des ausgebreiteten Gassacks bewegbar sind, **dadurch gekennzeichnet,** daß die Faltvorrichtungen der Oberund Unterseite (2, 3) zur Fixierung des Gassackgewebes fluchtend übereinander angeordnet sind und daß ein an den Gassack anschließbarer Überdruckerzeuger (8) vorgesehen ist.

14. Vorrichtung nach Anspruch 13, **dadurch gekennzeichnet,** daß ein an den Gassack anschließbarer Unterdruckerzeuger vorgesehen ist.

15. Vorrichtung nach Anspruch 13 oder 14, **dadurch gekennzeichnet,** daß sich überlappende Faltplatten (9 -13) angeordnet sind, die gegeneinander verschiebbar sind.

16. Vorrichtung nach mindestens einem der Ansprüche 13 bis 15, **dadurch gekennzeichnet,** daß sich überlappende, gegeneinander verschiebbare Faltplatten (9 - 13) auf konzentrischen Kreisen angeordnet sind.

17. Vorrichtung nach mindestens einem der vorhergehenden Ansprüche 13 bis 16, **dadurch gekennzeichnet,** daß als Faltvorrichtung mindestens eine Spiralfeder angeordnet ist.

18. Vorrichtung nach Anspruch 17, **dadurch gekennzeichnet,** daß ober- und unterhalb des Gassackes mindestens je eine Spiralfeder (16, 17) angeordnet ist.

19. Vorrichtung nach Anspruch 17 oder 18, **dadurch gekennzeichnet,** daß die Wickellagen der Spiralfeder im Abstand (a) zueinander liegen.

20. Vorrichtung nach mindestens einem der Ansprüche 13 bis 19, **dadurch gekennzeichnet,** daß als Faltvorrichtung mindestens eine spiralförmige Faltschale vorgesehen ist.

21. Vorrichtung nach Anspruch 20, **dadurch gekennzeichnet,** daß ober- und unterhalb des Gassackes mindestens je eine spiralförmige Faltschale vorgesehen ist.

22. Vorrichtung nach Anspruch 20 oder 21, **dadurch gekennzeichnet,** daß mehrere aufeinanderfolgende spiralförmige Faltschalen (18, 19, 20) vorgesehen sind.

23. Vorrichtung nach Anspruch 22, **dadurch gekennzeichnet,** daß sich jede Faltschale über einen Winkelbereich von etwa 360° erstreckt.

24. Vorrichtung nach mindestens einem der Ansprüche 13 bis 23, **dadurch gekennzeichnet,** daß von außen auf die Gassackoberfläche ein Über- und/oder Unterdruck anlegbar ist.

25. Vorrichtung nach Anspruch 24, **dadurch gekennzeichnet,** daß Über- und Unterdruck über Öffnungen in den Faltschalen oder Faltschalenzwischenräumen auf die Gassackoberfläche aufbringbar sind.

## Claims

1. Gas bag for an airbag module which is folded when in the non-activated state, and has a closed top side (2) and a lower side (3) which has a blow-in mouth or an opening for inserting a gas generator into the gas bag, wherein at least one fold is provided in each of the two sides (2,3) and extends at right angles to same,
**characterised in that**
each fold of one side (2 or 3) runs separate from the relevant opposite fold of the other side (3,2).

2. Gas bag according to claim 1 **characterised in that** the top side and lower side each have an outer main fold (2a-2d, 3a-3d, 14) and an inner main fold (2e-2h, 3e-3h, 15).

3. Gas bag according to claim 1 or 2 **characterised in that** the inner main fold (2e-2h, 3e-3h) of the top side and of the lower side (3) contact one another at least linearly.

4. Gas bag according to at least one of the preceding claims **characterised in that** the inner main fold (2e-2h, 3e-3h) of the top side (2) and of the lower side (3) contact one another on a straight or circumferential line.

5. Gas bag according to at least one of the preceding claims **characterised in that** the circumferential line runs in a ring or spiral.

6. Gas bag according to at least one of the preceding claims **characterised in that** the fold layer (2.1, 3.1) between the outer and inner main folds (2a-2d and 2e-2h or 3a-3d and 3e-3h) runs substantially at right angles to the plane of the spread-out empty gas bag.

7. Gas bag according to at least one of the preceding claims **characterised in that** several outer main folds (2a-2d, 3a-3d) and several inner main folds (2e-2h, 3e-3h) are provided which contact one another on circumferential ring-shaped lines.

8. Gas bag according to at least one of the preceding claims **characterised in that** the folds are arranged about a hollow cavity (5).

9. Gas bag according to at least one of the preceding claims **characterised in that** the main folds (2a-2d and 2e-2h) of the top side (2) lie symmetric relative to the main folds (3a-3d and 3e-3h) of the lower side (3).

10. Method for folding a gas bag according to claim 1 to 9 **characterised in that** the empty gas bag is spread out so that a top side and lower side (2,3) are provided, that then the two sides (2,3) are folded separately from each other and that the folds are gathered up together to the required size for packing into the airbag module.

11. Method according to claim 10 **characterised in that** folding devices are brought up to the gas bag from above and below and run substantially at right angles to the plane of the spread-out gas bag, that an excess pressure is produced in the gas bag to such an extent that the gas bag is pressed into spaces between the folding devices, that the folds are then compressed substantially across the folding direction and the folding devices are removed from the gas bag.

12. Method according to claim 10 or 11 **characterised in that** the removal of the folding devices takes place simultaneously with the production of vacuum in the gas bag.

13. Device for carrying out the method according to claims 10 to 12 wherein separate folding devices are provided for the top and lower side (2,3) of a gas bag which can be spread out between these folding devices, and wherein the folding devices run at least approximately perpendicular to the top and lower side (2,3) of the gas bag and are movable in the direction of the spread-out gas bag, **characterised in that** the folding devices of the top and lower side (2,3) are arranged flush aligned one above the other for fixing the gas bag fabric and that an excess pressure generator (8) is provided which can be connected to the gas bag.

14. Device according to claim 13 **characterised in that** a vacuum generator is provided which can be connected to the gas bag.

15. Device according to claim 13 or 14 **characterised in that** overlapping folding plates (9-13) are arranged to be displaced against each other.

16. Device according to at least one of claims 13 to 15 **characterised in that** overlapping mutually displaceable folding plates (9-13) are arranged on concentric circles.

17. Device according to at least one of the preceding claims 13 to 16 **characterised in that** at least one spiral spring is arranged as the folding device.

18. Device according to claim 17 **characterised in that** at least one spiral spring (16, 17) is mounted each above and below the gas bag.

19. Device according to claim 17 or 18 **characterised in that** the winding layers of the spiral spring lie at a distance (a) from each other.

20. Device according to at least one of claims 13 to 19 **characterised in that** at least one spiral folding dish is provided as the folding device.

21. Device according to claim 20 **characterised in that** at least one spiral folding dish is provided each above and below the gas bag.

22. Device according to claim 20 or 21 **characterised in that** several successive spiral folding dishes (18, 19, 20) are provided.

23. Device according to claim 22 **characterised in that** each folding dish extends over an angular area of about 360°.

24. Device according to at least one of claims 13 to 23 **characterised in that** an excess pressure and/or a vacuum can be applied from outside onto the surface of the gas bag.

25. Device according to claim 24 **characterised in that** excess pressure and vacuum can be applied to the surface of the gas bag through openings in the folding dishes or interspaces between the folding dishes.

## Revendications

1. Sac à gaz destiné à un module d'air-bag qui est plié à l'état non activé et présente un côté supérieur (2) fermé et un côté inférieur (3) comportant une embouchure de soufflage ou une ouverture pour l'introduction d'un générateur de gaz dans le sac à gaz, dans les deux côtés (2,3) un pli s'étendant perpendiculairement à ceux-ci étant respectivement prévus,
caractérisé en ce que
chaque pli d'un côté (2 ou 3) s'étend séparément par rapport au pli respectivement opposé de l'autre côté (3, 2).

2. Sac à gaz selon la revendication 1, caractérisé en ce que le côté supérieur et le côté inférieur présentent au moins chaque fois un pli extérieur (2a - 2d, 3a - 3d, 14) et chaque fois un pli principal intérieur (2e - 2h, 3e - 3h, 15).

3. Sac à gaz selon la revendication 1 ou 2, caractérisé en ce que le pli principal interne (2e - 2h, 3e - 3h) du côté supérieur (2) et du côté inférieur (3) se touchent au moins linéairement.

4. Sac à gaz selon au moins l'une des revendications précédentes, caractérisé en ce que le pli principal interne (2e - 2h, 3e - 3h) du côté supérieur (2) et du côté inférieur (3)se touchent sur une ligne droite ou circulaire.

5. Sac à gaz selon au moins l'une des revendications précédentes, caractérisé en ce que la ligne circulaire s'étend annulairement ou hélicoïdalement.

6. Sac à gaz selon au moins l'une des revendications précédentes, caractérisé en ce que la position des plis (2.1, 3.1) entre le pli principal intérieur et extérieur (2a - 2d et 2e - 2h ou 3a - 3d et 3e - 3h) s'étend sensiblement perpendiculairement par rapport au plan du sac à gaz vide déployé.

7. Sac à gaz selon au moins l'une des revendications précédentes, caractérisé en ce que plusieurs plis principaux extérieurs (2a - 2d, 3a - 3d) et plusieurs plis principaux intérieurs (2e - 2h, 3e - 3h) sont prévus et se touchent sur des lignes annulaires périphériques.

8. Sac à gaz selon au moins l'une des revendications précédentes caractérisé en ce que les plis sont disposés autour d'un espace creux (5).

9. Sac à gaz selon au moins l'une des revendications précédentes, caractérisé en ce que les plis principaux (2a -2d ou 2e - 2h) du côté supérieur (2) se situent symétriquement par rapport aux plis principaux (3a - 3d ou 3e - 3h) du côté inférieur (3).

10. Procédé pour le pliage d'un sac à gaz selon la revendication 1 à 9, caractérisé en ce que le sac à gaz vide est déployé de sorte qu'un coté supérieur et un côté inférieur (2, 3) sont présents, en ce qu'en suite les deux côtés (2, 3) sont pliés séparément l'un de l'autre et en ce que les plis sont resserrés conjointement à la grandeur souhaitée pour la mise en place dans le module d'air-bag.

11. Procédé selon la revendication 10, caractérisé en ce que des dispositifs de pliage peuvent être amenés sur le sac à gaz par le dessus et par le dessous qui sont essentiellement perpendiculaires au plan du sac à gaz déployé en ce que dans le sac à gaz il est produit une surpression telle que le sac à gaz se trouve comprimé dans les zones entre les dispositifs de plis et en ce que les plis sont ensuite comprimés sensiblement transversalement par rapport à la direction de pliage et en ce que les dispositifs de pliage sont séparés du sac à gaz.

12. Procédé selon la revendication 10 ou 11, caractérisé en ce que la séparation des dispositifs de pliage s'effectue lors de la production simultanée d'une sous-pression dans le sac à gaz.

13. Dispositif pour la réalisation du procédé selon les revendications 10 à 12, les dispositifs de pliage séparés pour le côté supérieur et le côté inférieur (2, 3) d'un sac à gaz déployé entre ces dispositifs de pliage étant prévus et ces dispositifs de pliage s'étendant au moins sensiblement parallèlement par rapport au côté supérieur et au côté inférieur (2, 3) du sac à gaz et étant mobile en direction du sac à gaz déployé, caractérisé en ce que les dispositifs de pliage du côté supérieur et du côté inférieur (2,3) sont disposés en superposition alignée pour la fixation du tissu du sac à gaz et en ce qu'un générateur de surpression (8) peut être raccordé sur le sac a gaz.

14. Dispositif selon la revendication 13, caractérisé en ce qu'il est prévu un générateur de sous-pression pouvant être raccordé au sac à gaz.

15. Dispositif selon les revendications 13 ou 14, caractérisé en ce qu'il est prévu des plaques de pliage se recouvrant (9, 13) et qui peuvent coulisser l'une contre l'autre.

16. Dispositif selon au moins l'une des revendications 13 à 15, caractérisé en ce que les plaques de pliage (9, 13) se superposant et coulissant l'une contre l'autre sont disposées sur des cercles concentriques.

17. Dispositif selon au moins l'une des revendications précédentes 13 à 16, caractérisé en ce qu'en tant que dispositif de pliage il est prévu au moins un ressort hélicoïdal.

18. Dispositif selon la revendication 17, caractérisé en ce qu'au dessus et au-dessous du sac à gaz il est prévu au moins chaque fois un ressort hélicoïdal (16, 17).

19. Dispositif selon les revendications 17 et 18, caractérisé en ce que les positions d'enroulement du ressort hélicoïdal se situent à une certaine distance entre elles (a) .

20. Dispositif selon au moins l'une des revendications 13 à 19, caractérisé en ce qu'en tant que dispositif de pliage il est prévu au moins un segment de pliage hélicoïdal.

21. Dispositif selon la revendication 20, caractérisé en ce qu'au dessus et au-dessous du sac à gaz il est prévu au moins chaque fois un segment de pliage hélicoïdal.

22. Dispositif selon la revendication 20 à 21, caractérisé en ce que il est prévu plusieurs segments de pliage hélicoïdaux superposés (18, 19, 20).

23. Dispositif selon la revendication 22, caractérisé en ce que chaque segment de pliage s'étend sur une zone angulaire d'environ 360°C.

24. Dispositif selon au moins l'une des revendications 13 à 23, caractérisé en ce qu'une surpression et/ou une sous-pression peut être appliquée de l'extérieur sur la surface du sac à gaz.

25. Dispositif selon la revendication 24, caractérisé en ce que la surpression et la sous-pression peuvent être amenées par des ouvertures dans les segments de pliage ou dans les espaces intermédiaires des segments de pliage sur la surface du sac à gaz.
